# EUROPÄISCHE PATENTSCHRIFT

(11) **EP 0 803 696 B1**
(45) Veröffentlichungstag und Bekanntmachung des Hinweises auf die Patenterteilung: **08.11.2000**
(21) Anmeldenummer: 97105662.7
(22) Anmeldetag: 05.04.1997
(51) Int. Cl.: F28F 13/12, F28F 21/04, F23L 15/04

(54) **Wärmeübertragendes Zwischenrohr aus keramischem Material und Rekuperator mit einem solchen Rohr**
Ceramic intermediate tube for exchanging heat and recuperator with such a tube
Tube intermédiaire en céramique pour échanger de la chaleur et récupérateur équipé d'un tel tube

(30) Priorität: 24.04.1996 DE 19616288
(43) Veröffentlichungstag der Anmeldung: 29.10.1997
(73) Patentinhaber: L B E Feuerungstechnik GmbH, 42389 Wuppertal (DE)
(72) Erfinder: Dittmann, Hans-Joachim, Dipl.-Ing., 58332 Schwelm (DE); Seltmann, Michael, Dipl.-Ing., 58456 Witten (DE)
(74) Vertreter: Harlacher, Mechthild, Dipl.-Ing.

(56) Entgegenhaltungen:
- EP-A- 0 296 032
- EP-A- 0 398 252
- EP-A- 0 451 662
- EP-A- 0 773 407
- FR-A- 2 403 518

## Beschreibung

Die Erfindung betrifft ein wärmeübertragendes Zwischenrohr für einen Rekuperator aus keramischem Material.

Aus der EP-A-0 451 662 ist ein Rekuperatorbrenner bekannt, dessen Rekuperator aus keramischem Material aus einer Innenwand, einer wärmeübertragenden Mittelwand und einer Außenwand besteht. Die Mittelwand bzw. das Zwischenrohr ist als Faltenwand ausgebildet.

Rekuperatoren aus Keramik haben gegenüber Stahlrekuperatoren den großen Vorteil der höheren Temperaturfestigkeit. Erkauft wird dieser Vorteil durch einen deutlich geringeren Wirkungsgrad, da keramische Rohre bisher nur in einfachen Formgebungen hergestellt werden konnten, z. B. als Glattrohre oder Wellrohre mit entsprechend begrenzter wärmeübertragender Fläche.

Der Erfindung liegt die Aufgabe zugrunde, den Wirkungsgrad des Rekuperators zu verbessern.

Zur Lösung dieser Aufgabe ist das Zwischenrohr dadurch gekennzeichnet, daß die Wandung des Zwischenrohrs an einer Mehrzahl von über der Länge und über dem Umfang verteilten Stellen zur Bildung von nach außen gerichteten Noppen auswärts und zur Bildung von nach innen gerichteter Noppen einwärts gewölbt ist.

Die Noppen bewirken eine beträchtliche Vergrößerung der wärmeübertragenden Fläche des Zwischenrohres und damit eine erhebliche Steigerung des Wirkungsgrades des Rekuperators.

Überraschenderweise hat es sich außerdem gezeigt, daß diese Noppen in der Lage sind, die Strömung der Wärmeträgermedien derart aufzureißen, daß Grenzschichtbildungen vermieden werden. Die Noppen erzielen dabei einen ähnlichen Effekt wie die Rippen von Rekuperatoren aus Stahl.

Keramisches Material läßt sich auf fertigungstechnisch vernünftigem Wege nicht mit Rippen versehen, und zwar aufgrund der durch Rippen bedingten unterschiedlichen Wandstärken. Glatte Rohre und Wellrohre werden im Schlickerverfahren hergestellt, bei dem sich die Keramik an der Wand der Gipsform in gleichmäßiger Wandstärke verfestigt. Die Wölbungen, die die Noppen des Zwischenrohres bilden, bedingen keine unterschiedlichen Wandstärken. Ein wesentlicher zusätzlicher Vorteil der Erfindung besteht also darin, daß das wärmeübertragende Zwischenrohr keine fertigungstechnischen Probleme mit sich bringt, sondern ebenso einfach herstellbar ist wie ein glattes Rohr.

Vorzugsweise sind die Noppen kranzförmig angeordnet, so daß also das wärmeübertragende Zwischenrohr einen gleichmäßig geformten Körper bildet, der gleichförmige Strömungsverhältnisse über der Länge des Rekuperators erzeugt.

Dabei wird vorgeschlagen, daß in jedem Kranz nach außen gerichtete und nach innen gerichtete Noppen einander abwechseln.

Eine ganz besonders vorteilhafte Alternative besteht darin, daß Kränze von außen gerichteten Noppen und Kränze von nach innen gerichteten Noppen einander abwechseln. Zwischen je zwei in Umfangsrichtung benachbarten Noppen bildet sich eine Strömungverengung, die zu einer Strömungsbeschleunigung und damit zu einer Drucksenkung führt. Im anschließenden Bereich steigt dann der Druck wieder an. Der besonders gute Wirkungsgrad, der mit dieser Bauform erzielt werden kann, ist auf den beschriebenen Wechsel von Kompression und Expansion zurückzuführen.

Dabei lassen sich beste Ergebnisse dadurch erzielen, daß die nach außen gerichteten Noppen und die nach innen gerichteten Noppen je auf gemeinsamen Mantellinien des Zwischenrohres liegen, wobei diese Mantellinien einander abwechseln. Die nach außen gerichteten Noppen und die nach innen gerichteten Noppen sitzen also auf Lücke. Dadurch bildet sich im Anschluß an jede Strömungsverengung eine Vertiefung an der Stelle der in Gegenrichtung gerichteten Noppe, die den Kompressionseffekt zu verstärken vermag. Über der Länge des Zwischenrohres entstehen geradlinige Strömungswege mit aufeinanderfolgenden Einschnürungen und Erweiterungen.

Vorzugsweise sind die Noppen kugelkalottenförmig ausgebildet, obwohl auch andere Ausbildungen möglich sind, z. B. linsenförmige Noppen.

Die Erfindung schafft ferner einen Rekuperator aus keramischem Material, insbesondere für Rekuperator-Brenner mit einem Innenrohr, einem Außenrohr und einem wärmeübertragenden Zwischenrohr nach einem der Patentansprüche 1 bis 6.

In Weiterbildung der Erfindung wird vorgeschlagen, daß die nach außen gerichteten Noppen das Außenrohr und die nach innen gerichteten Noppen das Innenrohr zentrieren, wobei sie also gleichzeitig als Abstandshalter wirken.

Die Erfindung wird im folgenden anhand eines bevorzugten Ausführungsbeispiels im Zusammenhang mit der beiliegenden Zeichnung näher erläutert.

Die Zeichnung zeigt in:
Figl. 1 einen Abschnitt eines wärmeübertrgenden Zwischenrohrs;
Fig. 2 einen Schnitt durch einen Rekuperators entlang der Linie II - II in Fig. 1;
Fig. 3 einen Schnitt durch den Rekuperator entlang der Linie III - III.

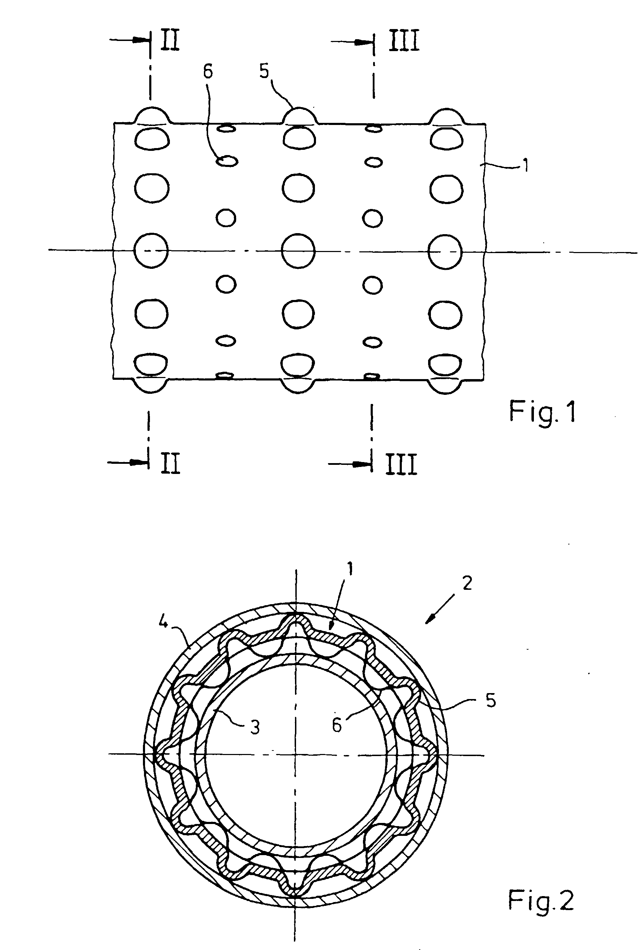

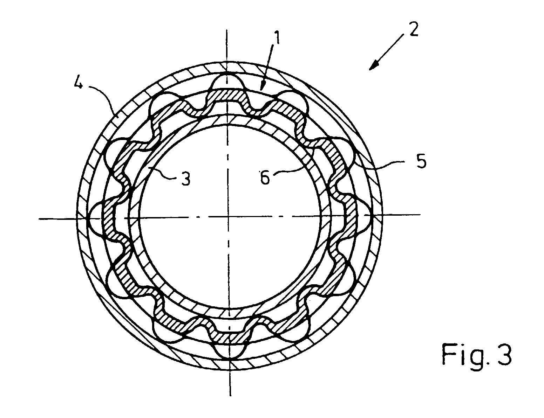

Fig. 1 zeigt ein wärmeübertragendes Zwischenrohr 1 für einen Rekuperator 2, wie er sich aus den Fig. 2 und 3 ergibt. Der Rekuperator 2 ist für einen Rekuperatorbrenner vorgesehen. Er weist ein Innenrohr 3 und ein Außenrohr 4 auf, wobei das Zwischenrohr 1 den Ringraum zwischen dem Innenrohr 3 und dem Außenrohr 4 in zwei konzentrische, im wesentlichen ringförmige Kanäle unterteilt. Der innere Kanal wird von der vorzuwärmenden Verbrennungsluft durchströmt, während der äußere Kanal vom Abgas des Brenners durchströmt wird.

Das Zwischenrohr 1 trägt nach außen gerichtete Noppen 5 und nach innen gerichtete Noppen 6, wobei die Noppen die wärmeübertragende Fläche des Zwischenrohres gegenüber einem glatten Rohr vergrößern und dadurch den Wirkungsgrad steigern. Wie deutlich aus den Fig. 2 und 3 hervorgeht, ist das Zwischenrohr 1 an den Stellen der Noppen kugelkalottenförmig gewölbt, und zwar nach außen für die Noppen 5 und nach innen für die Noppen 6. Dabei bleibt die Wandstärke des Zwischenrohres 1 konstant, so daß also eine Fertigung im Schlickerverfahren problemlos möglich ist.

Aus den Fig. 2 und 3 ergibt sich ferner, daß die nach außen gerichteten Noppen 5 das Außenrohr 4 und die nach innen gerichteten Noppen 6 das Innenrohr 3 des Rekuperators zentrieren.

Fig. 1 zeigt, daß die Noppen 5 und 6 in kranzförmigen Reihen angeordnet sind, wobei die Kränze der unterschiedlichen Noppen einander abwechseln. Außerdem sitzen die unterschiedlichen Noppen auf Lücke.

Bei einer Durchströmung des Rekuperators passieren die Gase am Orte der Noppen jeweils Einschnürungen, an die sich Erweiterungen anschließen. In letzteren bilden die entgegengesetzt gerichteten Noppen Vertiefungen. Die Gase werden also auf ihrem Strömungweg abwechseln komprimiert und expandiert. Dadurch werden Grenzschichtsbildungen vermieden, und es stellen sich Strömungsverhältnisse ein, die den Wirkungsgrad des Rekuperators an den eines Rippenrekuperators aus Stahl heranbringen.

Der gesamte Rekuperator besteht aus siliziuminfiltriertem Siliziumcarbit (SiSiC).

Im Rahmen der Erfindung sind durchaus Abwandlungsmöglichkeiten gegeben. Dies gilt vor allen Dingen für die Anordnung der Noppen. Unter Beibehaltung der kranzförmigen Verteilung können entgegengesetzt gerichtete Noppen in jedem Kranz einander abwechseln. Ferner besteht die Möglichkeit, die unterschiedlich gerichteten Noppen nicht auf Lücke zu setzen, sondern auf gemeinsame Mantellinien des Zwischenrohres. Schließlich können sämtliche Noppen auch willkürlich verteilt werden. Der Effekt der abwechselnden Kompression und Expansion ist in diesen Fällen allerdings nicht so ausgeprägt wie bei dem dargestellten Ausführungsbeispiel. Anstelle der kugelkalottenförmigen Noppen kommen auch beispielsweise linsenförmige Noppen in Frage.

## Patentansprüche

1. Wärmeübertragendes Zwischenrohr für einen Rekuperator aus keramischem Material,
dadurch gekennzeichnet,
daß die Wandung des Zwischenrohres (1) an einer Mehrzahl von über der Länge und über dem Umfang verteilten Stellen zur Bildung von nach außen gerichteten Noppen (5) auswärts und zur Bildung von nach innen gerichteten Noppen (6) einwärts gewölbt ist.

2. Zwischenrohr nach Anspruch 1,
dadurch gekennzeichnet,
daß die Noppen (5, 6) kranzförmig angeordnet sind.

3. Zwischenrohr nach Anspruch 2.
dadurch gekennzeichnet,
daß in jedem Kranz nach außen gerichtete und nach innen gerichtete Noppen einander abwechseln.

4. Zwischenrohr nach Anspruch 2,
dadurch gekennzeichnet,
daß Kränze von nach außen gerichteten Noppen (5) und Kränze von nach innen gerichteten Noppen (6) einander abwechseln.

5. Zwischenrohr nach einem der Ansprüche 1 bis 4,
dadurch gekennzeichnet,
daß die nach außen gerichteten Noppen (5) und die nach innen gerichteten Noppen (6) je auf gemeinsamen Mantellinien des Zwischenrohres (1) liegen, wobei diese Mantellinien einander abwechseln.

6. Zwischenrohr nach einem der Ansprüche 1 bis 5,
dadurch gekennzeichnet,
daß die Noppen (5, 6) kugelkalottenförmig ausgebildet sind.

7. Rekuperator aus keramischem Material, insbesondere für Rekuperator-Brenner, mit einem Innenrohr (3), einem Außenrohr (4) und einem wärmeübertragenden Zwischenrohr (1) nach einem der Ansprüche 1 bis 6.

8. Rekuperator nach Anspruch 7,
dadurch gekennzeichnet,
daß die nach außen gerichteten Noppen (5) das Außenrohr (4) zentrieren.

9. Rekuperator nach Anspruch 7 oder 8,
dadurch gekennzeichnet,
daß die nach innen gerichteten Noppen (6) das Innenrohr zentrieren.

## Claims

1. Heat-transferring intermediate tube for a recuperator made of ceramic material,
characterised in that,
the wall of the intermediate tube (1) is curved at a plurality of points distributed over its length and circumference outwards to form blisters (5) pointing outwards and inwards to form blisters (6) pointing inwards.

2. Intermediate tube according to claim 1,
characterised in that
the blisters (5, 6) are arranged in the shape of a collar.

3. Intermediate tube according to claim 2,
characterised in that
blisters pointing outwards and pointing inwards alternate in each collar.

4. Intermediate tube according to claim 2,
characterised in that
collars of blisters (5) pointing outwards and collars of blisters (6) pointing inwards alternate.

5. Intermediate tube according to any one of claims 1 through 4,
characterised in that
the blisters (5) pointing outwards and the blisters (6) pointing inwards each lie on common surface lines of the intermediate tube (1), said surface lines alternating.

6. Intermediate tube according to any one of claims 1 through 5,
characterised in that the blisters (5, 6) are in the shape of a calotte shell.

7. Recuperator made of ceramic material, in particular for a recuperative burner, with an inner tube (3), an outer tube (4) and a heat-transferring intermediate tube (1) according to any one of claims 1 through 6.

8. Recuperator according to claim 7,
characterised in that
the blisters (5) pointing outwards centre the outer tube (4).

9. Recuperator according to claim 7 or 8,
characterised in that
the blisters pointing inwards (5) centre the inner tube.

## Revendications

1. Tube intermédiaire en céramique pour échanger de la chaleur, caractérisé par le fait que la paroi du tube intermédiaire (1) est voûtée, à plusieurs endroits dispersés sur sa longueur et sa circonférence, vers l'extérieur pour former des nopes dirigées vers l'extérieur (5), et vers l'intérieur pour former des nopes dirigées vers l'intérieur (6).

2. Tube intermédiaire suivant la revendication 1, caractérisé par le fait que les nopes (5, 6) sont disposées sous forme de couronnes.

3. Tube intermédiaire suivant la revendication 2, caractérisé par le fait que dans chaque couronne des nopes dirigées vers l'extérieur alternent avec des nopes dirigées vers l'intérieur.

4. Tube intermédiaire suivant la revendication 2, caractérisé par le fait que des couronnes avec des nopes dirigées vers l'extérieur (5) alternent avec des couronnes avec des nopes dirigées vers l'intérieur (6).

5. Tube intermédiaire suivant l'une des revendications 1 à 4, caractérisé par le fait que les nopes dirigées vers l'extérieur (5) et les nopes dirigées vers l'intérieur (6) se trouvent à chaque fois sur des génératrices communes du tube intermédiaire (1), ces génératrices alternant les unes avec les autres.

6. Tube intermédiaire suivant l'une des revendications 1 à 5, caractérisé par le fait que les nopes (5, 6) sont conçues sous forme de calottes sphériques.

7. Récupérateur en céramique, plus particulièrement pour brûleurs autorécupérateurs, avec un tube intérieur (3), un tube extérieur (4) et un tube intermédiaire pour échanger de la chaleur (1) suivant l'une des revendications 1 à 6.

8. Récupérateur suivant la revendication 7, caractérisé par le fait que les nopes dirigées vers l'extérieur (5) centrent le tube extérieur (4).

9. Récupérateur suivant la revendication 7 ou 8, caractérisé par le fait que les nopes dirigées vers l'intérieur (6) centrent le tube intérieur.
